# NEUE EUROPÄISCHE PATENTSCHRIFT

(11) **EP 2 035 211 B2**
(45) Veröffentlichungstag und Bekanntmachung des Hinweises auf die Entscheidung über den Einspruch: **04.12.2019**
(45) Hinweis auf die Patenterteilung: 14.05.2014
(21) Anmeldenummer: 07764981.2
(22) Anmeldetag: 02.07.2007
(51) Int. Cl.: B44C 1/10, B29C 47/00, B27D 5/00, B29C 63/00, B41F 17/00

(54) **VERFAHREN UND VORRICHTUNG ZUM HERSTELLEN UND MONTIEREN EINER BEDRUCKTEN KANTENLEISTE**
METHOD AND APPARATUS FOR PRODUCING AND ASSEMBLING AN EDGE STRIP
PROCÉDÉ ET DISPOSITIF DE RÉALISATION ET DE POSE D'UNE ALAISE IMPRIMÉE

(30) Priorität: 04.07.2006 DE 102006030624
(43) Veröffentlichungstag der Anmeldung: 18.03.2009
(73) Patentinhaber: Rehau AG + Co, 95111 Rehau (DE)
(72) Erfinder: SCHREIER, Peter, 95032 Hof (DE)
(86) Internationale Anmeldenummer: PCT/EP2007/005823
(87) Internationale Veröffentlichungsnummer: WO 2008/003439

(56) Entgegenhaltungen:
- EP-A- 0 857 442
- EP-A1- 1 726 443
- EP-A1- 1 867 488
- WO-A1-00/53387
- WO-A1-02/00449
- DE-A- 10 049 826
- DE-A- 19 823 195
- DE-U- 8 707 629
- DE-U- 9 015 079
- GB-A- 2 385 826

## Beschreibung

Die Erfindung betrifft ein Verfahren gemäß dem Oberbegriff des Anspruchs 1. Darüber hinaus betrifft die Erfindung eine Vorrichtung zur Durchführung dieses Verfahrens.

Schnittflächen an Möbelkorpusteilen werden gewöhnlich mit Kanten(leisten) aus z. B. Massivholz, Holzfurnier, Melamin, Papier oder Polymeren abgedeckt. Dazu werden die Kanten(leisten) als Stangen-, Streifen-, oder Rollenware unter Verwendung von Klebern auf sogenannten Anleimeinrichtungen an die Schnittflächen der Möbelkorpusteile angefahren und befestigt. Zumindest die am fertigen Möbelstück optisch sichtbaren Kanten(leisten) und Flächen des Möbelkorpusteils sollen dekorativ stimmig sein. Entsprechen werden in den Anleimeinrichtungen vordekorierte Kanten(leisten) eingesetzt, deren optisches Aussehen den jeweils verarbeiteten Korpusteilen nachempfunden bzw. angepasst ist. Die Vordekoration der Kanten wird gewöhnlich von den Kantenherstellern mit gängigen Mehrfarbdruckverfahren, wie z.B. Tiefdruck, Flexodruck, Inkjetdruck und elektrographischen Verfahren durchgeführt.

Ein Verfahren mit den Merkmalen des Oberbegriffs des Patentanspruchs 1 ist aus der DE 100 49 826 A1 bekannt. Ein Digitaldruckverfahren zum Bedrucken von Kunststoffwerkstückoberflächen ist aus der DE 198 23 195 A1 bekannt. Die DE 87 07 629 U1 beschreibt ein Verfahren zur Oberflächenbearbeitung einer Kantenleiste aus Kunststoff.

Mit einem Wechsel der Flächendekoration am Möbelkorpusteil ist es auch erforderlich, die Anleimvorrichtung mit der zugehörigen, passend vordekorierten Kantenleiste zu rüsten. Es fallen somit teuere Maschinenstillstandszeiten und Produktionsunterbrechungen an. Aufwändige Kantenmagazine vor der Anleimvorrichtung verbessern die Situation, erfordern aber eine erhebliche Mehrinvestition. Für die auftragsbezogene, schnelle Fertigung von Möbelkorpusteilen müssen die mit den angebotenen Dekoren vordekorierten Kantenleisten mit hohem Kostenaufwand disponiert und auf Lager gehalten werden. Die zunehmende Zahl unterschiedlicher Möbeldekore und der Trend zu individuell dekorierten Möbeln verschärfen sie Situation. So werden hohe Material- und Lagerhaltungskosten verursacht.

Der Erfindung liegt die Aufgabe zugrunde, ein Verfahren und eine Vorrichtung zum Herstellen und Montieren einer bedruckten Kantenleiste bereitzustellen, wobei die Material- und Lagerhaltungskosten bei der Herstellung und Weiterverarbeitung der Kantenleiste gegenüber herkömmlichen Verfahren bzw. Vorrichtungen verringert werden können.

Diese Aufgabe wird durch die Merkmale des Patentanspruchs 1 gelöst.

Durch die Verwendung einer Kantenleiste mit einem neutralen Dekor muss jeweils nur eine einzige Kantenleistenausführung erzeugt bzw. vorrätig gehalten werden. Dies verringert die Material- und Lagerhaltungskosten gegenüber herkömmlichen Verfahren erheblich. Durch Anwendung des Digitaldruckverfahrens verringert sich die Rüstzeit gegenüber der Verwendung herkömmlicher Tiefdruckvorrichtungen mit Walzen erheblich, so dass auch kleinere Längeneinheiten kostengünstig hergestellt werden können. Auch wird eine durch Lagerhaltung bedingte Qualitätsverringerung der Kantenleiste weitgehend vermieden. Der Zuschnitt bzw. das Ablängen der Kantenleiste erfolgt bedarfsgerecht im Hinblick auf den jeweiligen Anwendungsfall, so dass ein Verschnitt minimiert wird. Somit verringert sich der Material- und Lagerhaltungsaufwand auf ein Minimum. Der Zuschnitt bzw. das Ablängen der Kantenleiste kann dabei vor oder nach der Montage der Kantenleiste an der Möbelkante erfolgen.

Bevorzugte Ausführungen der Erfindung sind Gegenstände der abhängigen Ansprüche.

In einer bevorzugten Ausführung der Erfindung wird der Schritt c) vor dem Schritt b) ausgeführt. Ein von der Kantenleiste abgelängter Abschnitt kann zur Ausführung des Schritts b) gesondert zentriert und ausgerichtet werden, wodurch die Druckqualität weiter verbessert werden kann. Durch den bedarfsgerechten Zuschnitt bzw. das Ablängen der Kantenleiste verringert sich der Verschnitt und damit auch der Material- und Lagerhaltungsaufwand auf ein Minimum.

In einer weiteren bevorzugten Ausführung der Erfindung wird der Schritt c) nach dem Schritt d) ausgeführt. Die Kantenleiste wird dabei vorzugsweise endlos an - mit gewisser Distanz - hintereinander folgende Möbelkanten angefahren, wird dann anschließend zwischen den Möbelkanten abgelängt bzw. aufgetrennt und bündig abgefräst, wobei überstehende Ränder entfernt werden.

Nach einer besonders bevorzugten Ausführungsform der Erfindung werden die Schritte a) und b), vorzugsweise a) bis c), zeitgleich in zumindest zwei Fertigungsstrecken ausgeführt, wobei die bedruckten Kantenleisten nach dem Ausführen der Schritte a) und b), vorzugsweise a) bis c), in einer Fertigungsstrecke zusammengeführt werden, in welcher der Schritt d) ausgeführt wird. Der Schritt b) des Bedruckens der Kantenleiste bildet den in zeitlicher Hinsicht limitierenden Faktor des erfindungsgemäßen Verfahrens, d.h. er bestimmt als langsamster Verfahrensschritt die Geschwindigkeit des gesamten Verfahrens. Der Schritt d) lässt sich beispielsweise erheblich schneller ausführen als der Schritt b). Um das Verfahren zu optimieren und die einzelnen Einrichtungen zur Ausführung der Schritte a) bis d) voll auszulasten, werden die Schritte a) und b), vorzugsweise a) bis c), parallel in mehreren Fertigungsstrecken durchgeführt. Der Schritt c) kann vor dem Schritt d) in einer der Fertigungsstrecken oder alternativ erst nach dem Schritt d) erfolgen.

In einer weiteren bevorzugten Ausführung der Erfindung werden die Kantenleisten im Schritt b) in den zwei Fertigungsstrecken einer unterschiedlichen Bedruckung unterzogen. So lassen sich Kantenleisten mit unterschiedlichen Dekoren zeitgleich herstellen.

In einer weiteren bevorzugten Ausführung der Erfindung wird die Kantenleiste im Schritt a) in einem kontinuierlichen Strang bereitgestellt. So kann ein Verschnitt der Kantenleiste erheblich verringert werden.

In einer weiteren bevorzugten Ausführung der Erfindung wird die Kantenleiste im Schritt a) extrudiert. Im Extrusionsverfahren lässt sich die Kantenleiste auf besonders einfache Weise in einem kontinuierlichen Strang herstellen und bereitstellen.

In einer weiteren bevorzugten Ausführungsform der Erfindung wird eine zu bedruckende Seite der Kantenleiste vor dem Ausführen von Schritt b) chemisch und/oder physikalisch vorbehandelt, beispielsweise durch Beflammen, Coronieren, Aufrauen, um eine Haftung eines Aufdrucks zu verbessern. Dadurch wird die Lebensdauer der Kantenleiste und die Qualität der Kantenleiste erhöht

In einer weiteren bevorzugten Ausführung der Erfindung wird die Kantenleiste im Schritt b) an einer Oberseite und/oder einer Unterseite bedruckt. In Verbindung mit einer (teil-)-transparenten Kantenleiste lassen sich somit räumliche Dekors erzeugen, da die Unterseite durch die (teil-)transparente Kantenleiste zumindest teilweise sichtbar ist.

In einer weiteren bevorzugten Ausführung der Erfindung wird eine im Schritt b) bedruckte Fläche der Kantenleiste nachträglich mit Klarlack überzogen. Dadurch wird der Druck gegenüber der Einwirkung von Staub oder Feuchtigkeit geschützt, was die Lebensdauer der Kantenleiste erhöht und die Qualität der Kantenleiste verbessert.

In einer weiteren bevorzugten Ausführung der Erfindung wird die Kantenleiste nach dem Ausführen von Schritt d) nachträglich spanabhebend bearbeitet. Dadurch können etwaige überstehende Ränder, die sich nach der Montage der Kantenleiste an dem zu dekorierenden Möbelstück ergeben, im Rahmen dieses Verfahrens entfernt werden.

Gegenstand der Erfindung ist auch eine Vorrichtung zur Durchführung des erfindungsgemäßen Verfahrens nach Anspruch 12.

In einer bevorzugten Ausführung der Erfindung umfasst die Vorrichtung zumindest zwei Fertigungsstrecken, in welchen jeweils eine Bereitstellungseinrichtung zur Ausführung des Schritts a) und eine Druckeinrichtung zur Ausführung des Schritts b) und eine Ablängeinrichtung zur Ausführung des Schritts c) angeordnet sind, wobei der Montageeinrichtung zur Ausführung des Schritts d) eine Zuführeinrichtung vorgeschaltet ist, um der Montageeinrichtung Kantenleisten von den zumindest zwei Fertigungsstrecken zuzuführen. So werden die einzelnen Einrichtungen der erfindungsgemäßen Vorrichtung optimal ausgelastet. Die Ablängeinrichtung zur Ausführung des Schritts c) kann alternativ auch hinter der Montageeinrichtung zur Ausführung des Schritts d) angeordnet sein. Im Rahmen der Erfindung liegt es, dass beispielsweise eine Montagegeschwindigkeit der Druckgeschwindigkeit angepasst wird.

In einer weiteren bevorzugten Ausführung der Erfindung weist die Steuereinheit eine Schnittstelle auf, über welche die elektronische Bilddatei einlesbar ist. So kann eine Kantenleiste auftragsbezogen und rechnergesteuert besonders zeitnah hergestellt werden, wenn die vom Kunden bereitgestellte Bilddatei in das System eingespeist wird. In einer weiteren bevorzugten Ausführung der Erfindung ist die Montageeinrichtung eine Anleimeinrichtung, um Abschnitte der bedruckten Kantenleiste auf einer Möbelkante aufzuleimen.

### Kurze Beschreibung der Zeichnungen

- Figur 1: ist eine schematische und symbolische Darstellung des erfindungsgemäßen Verfahrens zum Herstellen und Montieren einer bedruckten Kantenleiste und der zugehörigen Vorrichtung.
- Figur 2: ist eine schematische und symbolische Darstellung einer Abwandlung des in Figur 1 gezeigten Verfahrens bzw. der in Figur 1 gezeigten Vorrichtung, wobei die Positionen der Druckeinrichtung (2) und der Ablängeinrichtung (3) vertauscht sind, so dass der Schritt c) vor dem Schritt b) ausgeführt wird.
- Figur 3: ist eine schematische und symbolische Darstellung einer Abwandlung des in Figur 1 gezeigten erfindungsgemäßen Verfahrens bzw. der in Figur 1 gezeigten erfindungsgemäßen Vorrichtung, wobei die Schritte a) bis c) zeitgleich in zwei parallelen Fertigungsstrecken ausgeführt werden.

### Detaillierte Beschreibung der bevorzugten Ausführungsbeispiele

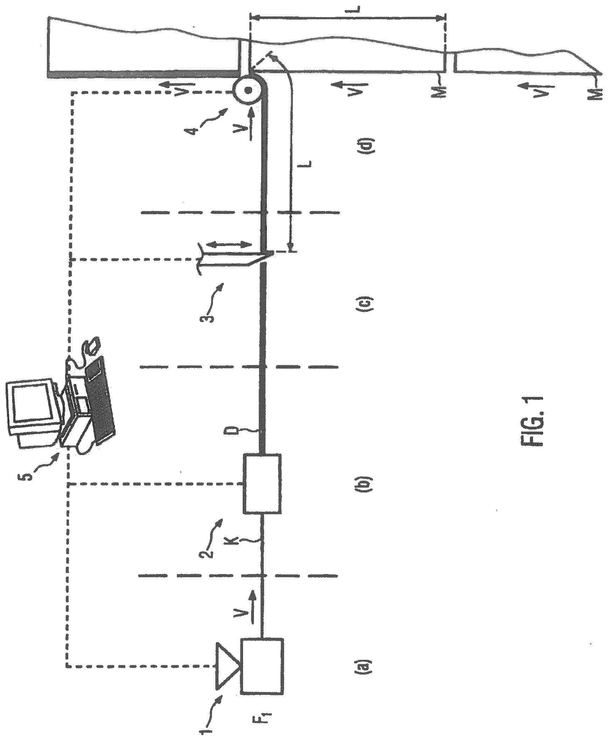

Figur 1 zeigt eine schematische Darstellung des erfindungsgemäßen Verfahrens zum Herstellen und Montieren einer bedruckten Kantenleiste K, umfassend die Schritte:
a) Bereitstellen einer Kantenleiste K mit einem neutralen Dekor;
b) Bedrucken der Kantenleiste K entsprechend einer elektronischen Bilddatei als Druckvorlage in einem Digitaldruckverfahren;
c) Ablängen der Kantenleiste K; und
d) Montieren der Kantenleiste K an einer Möbelkante M,
wobei die Schritte a) bis d) in einem im Wesentlichen kontinuierlichen Verfahren ausgeführt werden.

Die zugehörige Vorrichtung zur Durchführung dieses Verfahrens umfasst
Eine Bereitstellungseinrichtung 1 zur Ausführung des Schritts a);
eine Druckeinrichtung 2 zur Ausführung des Schritts b);
eine Ablängeinrichtung 3 zur Ausführung des Schritts c); und
eine Montageeinrichtung 4 zur Ausführung des Schritts d).

Die Bezeichnung "*im Wesentlichen kontinuierliches Verfahren"* bezieht sich darauf, dass in einem bevorzugten Ausführungsbeispiel, in welchem Kantenleisten in mehreren parallelen Fertigungsstrecken nach den Schritten (a) bis (c) gleichzeitig bearbeitet werden, die einzelnen kantenleistenabschnitte bzw. komplette Kantenleistenrollen in einem Zwischenspeicher gespeichert werden, bevor sie der Ausführung des Schrittes (d) unterzogen werden. Dabei kann es vor dem Bearbeitungsschritt (d) zu kurzen Wartezeiten kommen, weshalb das Verfahren als "*im Wesentlichen*" kontinuierlich bezeichnet wird.

Im vorliegenden Ausführungsbeispiel ist die Bereitstellungseinrichtung 1 eine Extrusionseinrichtung mit einem Extruder und einem Extrusionswerkzeug, zum Extrudieren eines kontinuierlichen Strangs mit einem im Wesentlichen rechteckigen Querschnitt. Die Extrudiereinrichtung 1 ist von herkömmlicher Bauart und extrudiert die zu bedruckende Kantenleiste K in dem kontinuierlichen Strang mit einer Geschwindigkeit von ca. 1 m/s. Die Extrusionsgeschwindigkeit ist jedoch im Rahmen der technischen Möglichkeiten frei wählbar. Alternativ ist die Bereitstellungseinrichtung 1 als Abwicklungseinrichtung ausgebildet, um eine vorgefertigte Kantenleiste K z.B. von einer Vorratsspule abzuwickeln. Die Kantenleiste K mit dem neutralen Dekor kann in beliebiger Weise bereitgestellt werden. Die Art und Weise der Bereitstellung der Kantenleiste K ist für das erfindungsgemäße Verfahren nicht maßgeblich.

Die Druckeinrichtung 2 ist eine Digitaldruckeinrichtung, die eine Oberseite und/oder Unterseite der Kantenleiste K entsprechend einer elektronischen Bilddatei als Druckvorlage bedruckt. Die Druckeinrichtung 2 umfasst eine Vorbehandlungseinrichtung zur vorzugsweise chemischen und/oder physikalischen Vorbehandlung einer zu bedruckenden Seite der Kantenleiste K z. B. durch Beflammen, Coronieren, Aufrauen, und umfasst außerdem einen Druckkopf zum Auftragen des Drucks D, eine Trocknungseinrichtung zum Trocknen des Drucks D, eine Lackierungseinrichtung zum Überziehen einer bedruckten Seite der Kantenleiste K mit einem Klarlack sowie eine UV-Härtungseinrichtung, um den Klarlack durch Beaufschlagung mit UV-Strahlung zu härten.

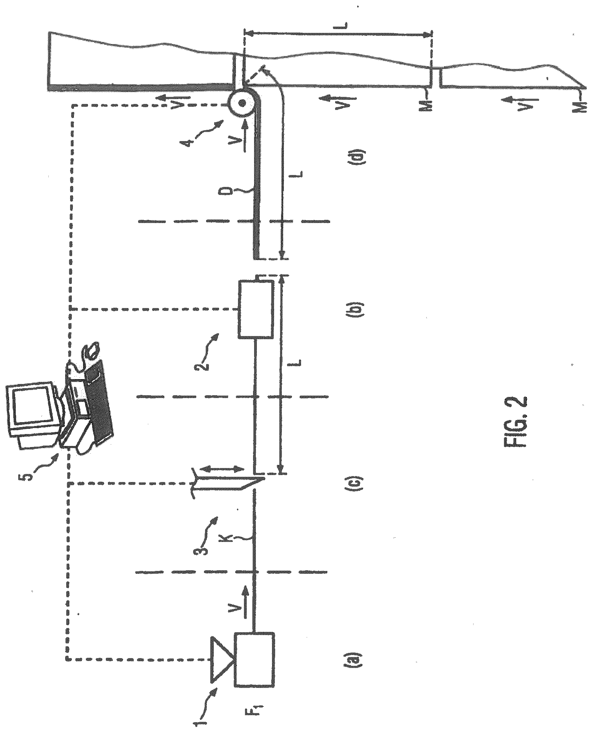

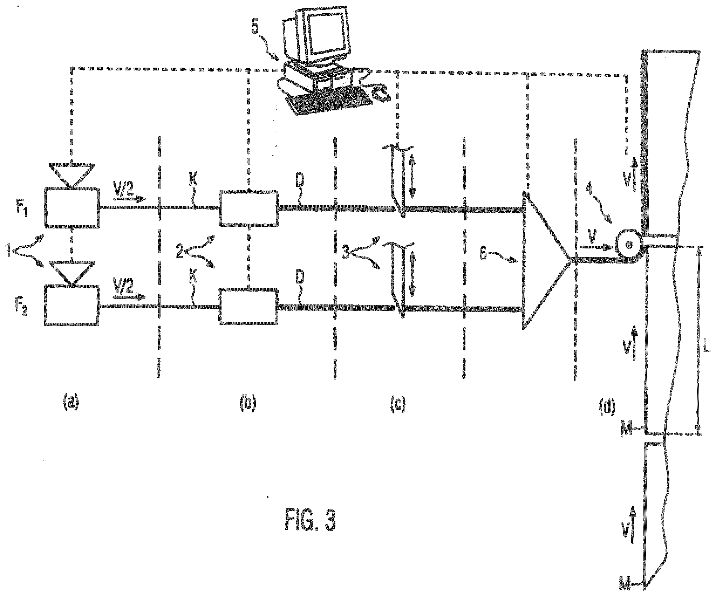

Die Ablängeinrichtung 3 ist eine Einrichtung, um einen Abschnitt der Kantenleiste K mit der vorgegebenen Länge L abzulängen und umfasst vorzugsweise eine senkrecht zu einer Vorschubrichtung der Kantenleiste K hin und her bewegbare Klinge zum Durchtrennen der Kantenleiste K. Die Ablängeinrichtung 3 kann hinter der Bereitstellungseinrichtung 1 in beliebiger Position angeordnet sein; z.B. wie in Fig. 1 und 3 abgebildet, zwischen der Druckeinrichtung 2 und der Montageeinrichtung 4, oder, wie in Fig. 2 abgebildet, zwischen der Bereitstellungseinrichtung 1 und der Druckeinrichtung 2, oder aber, wie nicht in den Figuren abgebildet, hinter der Montageeinrichtung 4, so dass die Kantenleiste K erst nach der Montage an der Möbelkante M abgelängt bzw. aufgetrennt wird.

Die Montageeinrichtung 4 ist eine Einrichtung, um die Kantenleiste K bzw. einen Abschnitt davon an der Möbelkante M eines zu dekorierenden Möbelstücks zu montieren. Die Montageeinrichtung 4 umfasst eine Aufnahmeeinrichtung, um die Kantenleiste, bzw. einen Abschnitt davon, aufzunehmen, eine Klebemittelauftragseinrichtung, um eine mit der Möbelkante M zu verklebende Unterseite der Kantenleiste, bzw. die Unterseite des Abschnitts davon, mit Klebemittel zu beaufschlagen, eine Anpresseinrichtung, um die an der Unterseite mit Klebemittel beaufschlagte Kantenleiste, bzw. den Abschnitt davon, an der Möbelkante M anzupressen sowie eine Nachbearbeitungseinrichtung, um die angeklebte Kantenleiste, bzw. einen Abschnitt davon, nachträglich spanabhebend zu bearbeiten und um störende Ränder, die über die Klebefläche überstehen, durch Bündigfräsen mit den die Klebefläche begrenzenden Seiten der Möbelkante M nachträglich zu entfernen.

Eine Steuereinheit 5 ist über ein Netzwerk mit der Bereitstellungseinrichtung 1, der Druckeinrichtung 2, der Ablängeinrichtung 3 und der Montageeinrichtung 4 verbunden. Durch die Steuereinheit 5 sind die Einrichtungen 1, 2, 3 und 4 einzeln ansteuerbar und aufeinander abstimmbar. Die Steuereinheit 5 umfasst eine Schnittstelle zum Einlesen einer elektronischen Bilddatei, die als Druckvorlage für die Bedruckung der Kantenleiste A verwendet wird. Die Steuereinheit 5 ist vorzugsweise als PC ausgebildet und weist als Schnittstelle ein Disketten-, CD-, DVD-Laufwerk und/oder eine Internetverbindung auf. Die Bereitstellungsgeschwindigkeit, mit welcher die Kantenleiste K von der Bereitstellungseinrichtung 1 bereitgestellt wird, die Druckgeschwindigkeit, mit welcher die Kantenleiste K in der Druckeinrichtung 2 bedruckt wird sowie die Montagegeschwindigkeit, mit welcher die Kanenleiste K bzw. ein Abschnitt davon von der Montageeinrichtung 4 an der Möbelkante M montiert wird, sind über die Steuereinheit 5 einstellbar und aufeinander abstimmbar. Die Steuereinheit 5 kann die Ablängeinrichtung 3 darüber hinaus so steuern, dass ein Abschnitt der Kantenleiste K mit einer vorbestimmten Länge L abgetrennt wird.

Figur 2 zeigt eine schematische Ansicht des in Figur 1 gezeigten erfindungsgemäßen Verfahrens bzw. der in Figur 1 gezeigten erfindungsgemäßen Vorrichtung, wobei die Positionen der Druckeinrichtung 2 und der Ablängeinrichtung 3 vertauscht sind. Die Einrichtungen 1, 2, 3, 4 und 5 sind baugleich mit den Einrichtungen 1, 2, 3, 4 und 5 des mit Bezug auf Figur 1 beschriebenen Ausführungsbeispiels und haben dieselben Funktionen. Bevorzugt wird eine Ausführung der Erfindung, wonach die Kantenleiste K von der Bereitstellungseinrichtung 1 bereitgestellt wird, anschließend von der Druckeinrichtung 2 bedruckt wird, daran anschließend endlos an - mit gewisser Distanz - hintereinander folgende Möbelkanten M angefahren und von der Montageeinrichtung 4 an den Möbelkanten M montiert sowie bündig abgefräst wird, wobei überstehende Ränder entfernt werden. Erst zuletzt wird die Kantenleiste K von der Ablängeinrichtung 3 zwischen den Möbelkanten M abgelängt bzw. aufgetrennt.

Figur 3 zeigt eine Abwandlung des in Figur 1 gezeigten erfindungsgemäßen Verfahrens bzw. der in Figur 1 gezeigten erfindungsgemäßen Vorrichtung, wobei die Schritte a) und b), vorzugsweise a) bis c), in zwei oder mehreren Fertigungsstrecken F₁, F₂ gleichzeitig ausgeführt werden, und die Kantenleisten bzw. Abschnitte davon einer Montageeinrichtung 4 in einer weiteren Fertigungsstrecke zugeführt werden, in welcher der Schritt d) ausgeführt wird. Die Einrichtungen 1, 2, 3, 4 und 5 sind baugleich mit den Einrichtungen 1, 2, 3, 4 und 5 des mit Bezug auf Figur 1 beschriebenen Ausführungsbeispiels und haben dieselben Funktionen. Um die in den jeweiligen Fertigungsstrecken bereitgestellten und Kantenleisten bzw. Abschnitte davon der Montageeinrichtung 4 zuzuführen, ist eine Zuführeinrichtung 6 vorgesehen. Die Zuführeinrichtung 6 umfasst Aufwickeleinrichtungen, um die in den jeweiligen Fertigungsstrecken bereitgestellten und bedruckten Kantenleisten bzw. Abschnitte davon auf Rollen aufzuwickeln, einen Zwischenspeicher, um die Kantenleisten bzw. Abschnitte davon vor der Ausführung des Schritts d) zwischenzuspeichern und zumindest eine Abwickeleinrichtung, um eine bedruckte Kantenleiste bzw. einen Abschnitt davon bei Bedarf abzuwickeln und der Montageeinrichtung 4 zuzuführen. In einem so genannten *"offenen Fertigungsverbund"* werden die bedruckten Kantenleisten bzw. Abschnitte davon durch manuellen Eingriff einer Bedienperson der nachgeschälteten Montageeinrichtung 4 zugeführt, während dies bei einem so genannten *"geschlossenen Fertigungsverbund*" vollautomatisch vollzogen wird. Die Steuereinheit 5 ist mit sämtlichen Einrichtungen 1, 2, 3, 4 und 6 verbunden, um die Extrusionsgeschwindigkeiten, die Druckgeschwindigkeiten und die Montagegeschwindigkeiten einzustellen und aufeinander abzustimmen. Die Montagegeschwindigkeit V ist vorzugsweise gleich der Summe der Bearbeitungsgeschwindigkeiten (V/2 + V/2) in den vorgeschalteten Fertigungsstrecken F₁, F₂.

Das erfindungsgemäße Verfahren wird nachfolgend mit Bezug auf Figur 1 beschrieben.

Im Schritt a) wird ein grobkörniges bzw. granuliertes Rohmaterial, vorzugsweise Hartpolyvinylchlorid (Hart-PVC), Polypropylen (PP), oder Acrynitrilbutadienstyrol (ABS) in die Bereitstellungsvorrichtung 1 eingefüllt, aufgeschmolzen und extrudiert, so dass eine Kantenleiste K als strangförmiges Gut mit einem im Wesentlichen rechteckigen Querschnitt bereitgestellt wird. Vorzugsweise wird das Extrudat unmittelbar nach dem Verlassen des Extrusionswerkzeugs abgekühlt, um die Form der Kantenleiste für die nachfolgenden Bearbeitungsschritte zu fixieren. Alternativ wird eine derart vorgefertigte Kantenleiste - auf einer Vorratsspule aufgewickelt - bereitgestellt und durch die Bereitstellungseinrichtung 1 abgewickelt. Die Ausführung des Schritts a) wird von der Steuereinheit 5 überwacht und gesteuert.

Im Schritt b) wird die Kantenleiste K in der Druckvorrichtung 2 vorzugsweise chemisch und/oder physikalisch vorbehandelt, z.B. durch Beflammen, Coronieren, Aufrauen, um ein Anhaften der Druckfarbe auf einer zu bedruckenden Seite der Kantenleiste K zu verbessern. Anschließend wird die Kantenleiste entsprechend einer elektronischen Datei als Druckvorlage im Digitaldruckverfahren bedruckt, der Druck D getrocknet, die bedruckte(n) Seite(n) nachträglich mit einem Klarlack überzogen, wobei der Klarlack wiederum durch Beaufschlagung mit UV-Strahlung getrocknet wird, um den Druck D dauerhaft zu fixieren. Es kann eine Oberseite und/oder Unterseite der Kantenleiste K bedruckt werden. Die Ausführung des Schritts b) wird von der Steuereinheit 5 überwacht und gesteuert.

Im Schritt c) wird die mit einem Druck D versehene Kantenleiste K abgelängt und entsprechend einer Länge L einer zu dekorierenden Möbelkante M durch eine Ablängeinrichtung 3 in Abschnitte aufgeteilt, wobei die Kantenleiste K durchtrennt wird. Die Ausführung des Schritts c) wird von der Steuereinheit 5 überwacht und gesteuert. Der Schritt c) kann wahlweise, je nach Bedarf, nach dem Schritt a), nach dem Schritt b) oder, was bevorzugt wird, nach dem Schritt d) ausgeführt werden.

Im Schritt d) wird die Kantenleiste bzw. ein Abschnitt davon in die Montageeinrichtung 4 eingeführt, an der Unterseite mit Klebstoff beaufschlagt und an die zu dekorierende Möbelkante M angepresst und angeklebt. Nachträglich werden die über die Klebefläche überstehenden Ränder der Kantenleiste bzw. des Abschnitts davon durch Bündigfräsen mit den die Klebefläche begrenzenden Seiten der Möbelkante M entfernt. Die Möbelstücke mit je einer zu dekorierenden Möbelkante M werden hintereinander in einer Vorschubrichtung mit einer Vorschubgeschwindigkeit V an der Montageeinrichtung 4 vorbeigeführt. Dabei wird die mit Vorschubgeschwindigkeit V in die Montageeinrichtung 4 eingeführte Kantenleiste bzw. ein Abschnitt davon mit der Unterseite an der zu dekorierenden Möbelkante M über die volle Länge L angeklebt. Die Ausführung des Schritts d) wird von der Steuereinheit 5 überwacht und gesteuert.

In dem in Figur 2 schematisch dargestellten Verfahren bzw. in der in Figur 2 schematisch dargestellten Vorrichtung sind die Positionen der Druckeinrichtung 2 und der Ablängeinrichtung 3 vertauscht, so dass die Kantenleiste abgelängt und in Abschnitte mit der vorbestimmten Länge L einer zu dekorierenden Möbelkante M aufgeteilt wird, und nachfolgend in der Druckeinrichtung 2 bedruckt wird, wobei der Druck D aufgetragen wird. Ansonsten werden in dem mit Bezug auf Figur 2 beschriebenen Verfahren in den Verfahrensschritten (a) bis (d) dieselben Operationen ausgeführt, wie in dem mit Bezug auf Figur 1 beschriebenen Verfahren.

In dem in Figur 3 schematisch dargestellten erfindungsgemäßen Verfahren bzw. in der in Figur 3 schematisch dargestellten erfindungsgemäßen Vorrichtung werden die Schritte a) und b), vorzugsweise a) bis c), auf zwei oder mehreren parallel geschalteten Fertigungsstrecken F₁, F₂ ausgeführt. Dabei werden die Kantenleisten K im Schritt a) in der oben beschriebenen Weise von den Bereitstellungseinrichtungen 1 bereitgestellt und nachfolgend im Schritt b) in der oben beschriebenen Weise von den Druckeinrichtungen 2 vorbehandelt, bedruckt und nachbehandelt. Daran anschließend, falls ein Zuschnitt der Kantenleisten K vor der Montage erwünscht ist, werden die Kantenleisten K im Schritt c) in der oben beschriebenen Weise von den Ablängeinrichtungen 3 abgelängt. Alternativ werden in den einzelnen Fertigungsstrecken F₁, F₂ ganze Kantenleistenrollen produziert, wobei der Zuschnitt bzw. der Schritt c) erst nach der Montage bzw. nach dem Schritt d) erfolgt. Dafür ist im Übrigen auch nur eine Ablängeinrichtung 3 erforderlich. Die in den Fertigungsstrecken F₁, F₂ erzeugten Kantenleisten K, bzw. Abschnitte davon, werden der Zuführeinrichtung 6 zugeführt und z.B. auf Rollen aufgewickelt. Dies geschieht mit der Geschwindigkeit V/2. Dabei werden die Kantenleisten K bzw. Abschnitte davon in dem Zwischenspeicher 6 bereitgehalten und bei Bedarf von einer Abwickeleinrichtung abgewickelt, um der Montageeinrichtung 4 mit Vorschubgeschwindigkeit V zugeführt zu werden. In der Montageeinrichtung 4 werden die Kantenleisten bzw. Abschnitte davon im Schritt d) mit Klebstoff beaufschlagt und an einer zu dekorierenden Möbelkante M angepresst und befestigt. Sämtliche Einrichtungen 1, 2, 3, 4 und 6 bzw. sämtliche Verfahrensschritte a), b), c) und d) werden von der Steuereinheit 5 überwacht und gesteuert.

Nach dem erfindungsgemäßen Verfahren bzw. mit der erfindungsgemäßen Vorrichtung wird die Kantenleiste in einem im Wesentlichen kontinuierlichen Verfahren bereitgestellt, bedruckt, abgelängt und an einem bestimmungsgemäßen Einsatzort, vorzugsweise einer Möbelkante, montiert. Dabei kann die Kantenleiste mit einem beliebigen Dekor versehen werden. Bei größtmöglicher Flexibilität hinsichtlich des Dekors der Kantenleiste lassen sich mit dem erfindungsgemäßen Verfahren bzw. mit der erfindungsgemäßen Vorrichtung auf einfache und kostengünstige Weise bedruckte Kantenleisten herstellen und montieren.

## Patentansprüche

1. Verfahren zum Herstellen und Montieren einer bedruckten Kantenleiste (K), umfassend die Schritte:
a) Bereitstellen einer Kantenleiste (K) mit einem neutralen Dekor mittels einer Bereitstellungseinrichtung (1);
b) Bedrucken der Kantenleiste (K) entsprechend einer elektronischen Bilddatei als Druckvorlage in einem Digitaldruckverfahren mittels einer Druckeinrichtung (2);
c) Ablängen der Kantenleiste (K) mittels einer Ablängeinrichtung (3); und
**dadurch gekennzeichnet, dass** das Verfahren ferner umfasst den Schritt
d) Montieren der Kantenleiste (K) an einer Möbelkante (M) mittels einer Montageeinrichtung (4),
dass die Schritte a) bis d) in einem im Wesentlichen kontinuierlichen Verfahren ausgeführt werden, dass zumindest die Druckeinrichtung (2) und die Montageeinrichtung (4) über ein Netzwerk mit einer Steuereinheit (5) verbunden sind und von dieser gesteuert werden, und dass der Schritt d) nach dem Schritt b) ausgeführt wird.

2. Verfahren nach Anspruch 1, wobei der Schritt c) vor dem Schritt b) ausgeführt wird.

3. Verfahren nach Anspruch 1 oder 2, wobei der Schritt c) nach dem Schritt d) ausgeführt wird.

4. Verfahren nach einem der vorangegangenen Ansprüche, wobei die Schritte a) und b), vorzugsweise a) bis c), zeitgleich in zumindest zwei parallelen Fertigungsstrecken (F₁, F₂) ausgeführt werden, wobei die Kantenleisten bzw. Abschnitte davon nach dem Ausführen der Schritte a) und b), vorzugsweise a) bis c), einer weiteren Fertigungsstrecke zugeführt werden, in welcher der Schritt d) ausgeführt wird.

5. Verfahren nach Anspruch 3, wobei die Kantenleisten im Schritt b) in unterschiedlichen Fertigungsstrecken unterschiedlich bedruckt werden.

6. Verfahren nach einem der vorangegangen Ansprüchen, wobei die Kantenleiste (K) in einem kontinuierlichen Strang oder in einer endlichen Länge bereitgestellt wird.

7. Verfahren nach einem der vorangegangen Ansprüchen, wobei die Kantenleiste (K) extrudiert wird.

8. Verfahren nach einem der vorangegangen Ansprüchen, wobei eine zu bedruckende Seite der Kantenleiste (K) vor dem Bedrucken chemisch und/oder physikalisch vorbehandelt wird, um eine Haftung eines Drucks (D) zu verbessern.

9. Verfahren nach einem der vorangegangenen Ansprüche, wobei die Kantenleiste (K) an einer Oberseite und/oder einer Unterseite bedruckt wird.

10. Verfahren nach einem der vorangegangen Ansprüchen, wobei eine bedruckte Seite der Kantenleiste nachträglich mit Klarlack überzogen wird.

11. Verfahren nach einem der vorangegangenen Ansprüche, wobei die Kantenleiste nachträglich spanabhebend bearbeitet wird.

12. Vorrichtung zur Durchführung des Verfahrens nach einem der vorangegangenen Ansprüche, umfassend:
- eine Bereitstellungseinrichtung (1) zur Ausführung des Schritts a);
- eine Druckeinrichtung (2) zur Ausführung des Schritts b);
- eine Ablängeinrichtung (3) zur Ausführung des Schritts c);
**dadurch gekennzeichnet, dass** eine Montageeinrichtung (4) zur Ausführung des Schritts d) vorgesehen ist, dass zumindest die Druckeinrichtung (2) und die Montageeinrichtung (4) über ein Netzwerk mit einer Steuereinheit (5) verbunden sind und von der Steuereinheit (5) gesteuert werden, und dass die Montageeinrichtung (4) der Druckeinrichtung (2) nachgeschaltet ist.

13. Vorrichtung nach Anspruch 12, wobei die Vorrichtung zumindest zwei Fertigungsstrecken (F₁, F₂) umfasst, in welchen jeweils eine Bereitstellungseinrichtung (1) zur Ausführung des Schritts a) und eine Druckeinrichtung (2) zur Ausführung des Schritts b) und vorzugsweise eine Ablängeinrichtung (3) zur Ausführung des Schritts c) angeordnet sind, wobei der Montageeinrichtung (4) eine Zuführeinrichtung (6) vorgeschaltet ist, um der Montageeinrichtung (4) die bedruckten Kantenleisten von den zumindest zwei Fertigungsstrecken (F₁, F₂) zuzuführen.

## Claims

1. Method for producing and fitting a printed edge strip (K), comprising the steps:
a) providing an edge strip (K) having a neutral decoration by means of a providing device (1);
b) printing the edge strip (K) in accordance with an electronic image file as print template in a digital printing process by means of a printing device (2);
c) cutting the edge strip (K) to length by means of a cutting device (3); and
**characterised in that** the method further comprises the step
d) fitting the edge strip (K) to an edge (M) of a piece of furniture by means of a fitting device (4),
**in that** steps a) to d) are carried out in a substantially continuous process, **in that** at least the printing device (2) and the fitting device (4) are connected *via* a network to a control unit (5) and are controlled by the control unit, and **in that** step d) is carried out after step b).

2. Method according to claim 1, wherein step c) is carried out before step b).

3. Method according to claim 1 or 2, wherein step c) is carried out after step d).

4. Method according to any one of the preceding claims, wherein steps a) and b), preferably a) to c), are carried out simultaneously in at least two parallel manufacturing lines (F₁, F₂), wherein, after steps a) and b), preferably a) to c), have been carried out, the edge strips or portions thereof are fed to a further manufacturing line in which step d) is carried out.

5. Method according to claim 3, wherein in step b) the edge strips are printed differently in different manufacturing lines.

6. Method according to any one of the preceding claims, wherein the edge strip (K) is provided in a continuous strand or in a finite length.

7. Method according to any one of the preceding claims, wherein the edge strip (K) is extruded.

8. Method according to any one of the preceding claims, wherein a side of the edge strip (K) that is to be printed is pre-treated chemically and/or physically prior to printing in order to improve adhesion of a print (D).

9. Method according to any one of the preceding claims, wherein the edge strip (K) is printed on a top side and/or a bottom side.

10. Method according to any one of the preceding claims, wherein a printed side of the edge strip is subsequently coated with clear lacquer.

11. Method according to any one of the preceding claims, wherein the edge strip is subsequently machined.

12. Apparatus for carrying out the method according to any one of the preceding claims, comprising:
- a providing device (1) for carrying out step a);
- a printing device (2) for carrying out step b);
- a cutting device (3) for carrying out step c);
**characterised in that** a fitting device (4) for carrying out step d) is provided, **in that** at least the printing device (2) and the fitting device (4) are connected *via* a network to a control unit (5) and are controlled by the control unit (5), and **in that** the fitting device (4) is arranged downstream of the printing device (2).

13. Apparatus according to claim 12, wherein the apparatus comprises at least two manufacturing lines (F₁, F₂) in each of which there are arranged a providing device (1) for carrying out step a) and a printing device (2) for carrying out step b) and preferably a cutting device (3) for carrying out step c), wherein a feed device (6) is arranged upstream of the fitting device (4) for feeding the printed edge strips from the at least two manufacturing lines (F₁, F₂) to the fitting device (4).

## Revendications

1. Procédé de fabrication et de montage d'une alaise (K) imprimée, comprenant les étapes consistant à :
a) préparer une alaise (K) dotée d'un décor neutre au moyen d'un dispositif de préparation (1) ;
b) imprimer l'alaise (K) en fonction d'un fichier image électronique en guise de modèle d'impression selon un procédé d'impression numérique au moyen d'un dispositif d'impression (2) ;
c) couper à longueur l'alaise (K) au moyen d'un dispositif de coupe à longueur (3) ; et
**caractérisé en ce que** le procédé comprend en outre l'étape consistant à :
d) monter l'alaise (K) sur un bord de meuble (M) au moyen d'un dispositif de montage (4),
**en ce que** les étapes a) à d) sont exécutées selon un procédé sensiblement continu, **en ce qu'**au moins le dispositif d'impression (2) et le dispositif de montage (4) sont reliés à une unité de commande (5) par le biais d'un réseau et sont commandés par celle-ci, et **en ce que** l'étape d) est exécutée après l'étape b).

2. Procédé selon la revendication 1, dans lequel l'étape c) est exécutée avant l'étape b).

3. Procédé selon la revendication 1 ou 2, dans lequel l'étape c) est exécutée après l'étape d).

4. Procédé selon l'une des revendications précédentes, dans lequel les étapes a) et b), de préférence a) à c), sont exécutées simultanément dans au moins deux chaînes de production (F₁, F₂) parallèles, les alaises ou des parties de celles-ci étant alimentées, après l'exécution des étapes a) et b), de préférence a) à c), dans une autre chaîne de production, dans laquelle l'étape d) est exécutée.

5. Procédé selon la revendication 3, dans lequel, à l'étape b), les alaises sont imprimées différemment dans différentes chaînes de production.

6. Procédé selon l'une des revendications précédentes, dans lequel l'alaise (K) est préparée en une bande continue ou en une longueur limitée.

7. Procédé selon l'une des revendications précédentes, dans lequel l'alaise (K) est extrudée.

8. Procédé selon l'une des revendications précédentes, dans lequel un côté à imprimer de l'alaise (K) est prétraité chimiquement et/ou physiquement avant l'impression, pour améliorer l'adhérence d'une impression (D).

9. Procédé selon l'une des revendications précédentes, dans lequel l'alaise (K) est imprimée sur un côté supérieur et/ou un côté inférieur.

10. Procédé selon l'une des revendications précédentes, dans lequel un côté imprimé de l'alaise est revêtu ultérieurement d'un vernis clair.

11. Procédé selon l'une des revendications précédentes, dans lequel l'alaise est usinée ultérieurement par enlèvement de copeaux.

12. Dispositif destiné à exécuter le procédé selon l'une des revendications précédentes, comprenant :
- un dispositif de préparation (1) pour exécuter l'étape a) ;
- un dispositif d'impression (2) pour exécuter l'étape b) ;
- un dispositif de coupe à longueur (3) pour exécuter l'étape c) ;
**caractérisé en ce qu'**un dispositif de montage (4) pour exécuter l'étape d) est prévu, **en ce qu'**au moins le dispositif d'impression (2) et le dispositif de montage (4) sont reliés à une unité de commande (5) par le biais d'un réseau et sont commandés par l'unité de commande (5), et **en ce que** le dispositif de montage (4) est placé en aval du dispositif d'impression (2).

13. Dispositif selon la revendication 12, dans lequel le dispositif comprend au moins deux chaînes de production (F₁, F₂), dans lesquelles sont respectivement disposés un dispositif de préparation (1) pour exécuter l'étape a) et un dispositif d'impression (2) pour exécuter l'étape b) et de préférence un dispositif de coupe à longueur (3) pour exécuter l'étape c), un dispositif d'alimentation (6) étant placé en amont du dispositif de montage (4), pour alimenter les alaises imprimées dans le dispositif de montage (4) depuis les au moins deux lignes de production (F₁, F₂).
